# EUROPÄISCHE PATENTSCHRIFT

(11) **EP 3 372 657 B1**
(45) Veröffentlichungstag und Bekanntmachung des Hinweises auf die Patenterteilung: **25.09.2019**
(21) Anmeldenummer: 17160428.3
(22) Anmeldetag: 10.03.2017
(51) Int. Cl.: C10L 9/08, C10L 5/44

(54) **VORRICHTUNG ZUR DURCHFÜHRUNG EINER HYDROTHERMALEN KARBONISIERUNGSREAKTION**
DEVICE FOR PERFORMING A HYDROTHERMAL CARBONISATION REACTION
DISPOSITIF D'EXÉCUTION D'UNE RÉACTION DE CARBONISATION HYDROTHERMIQUE

(43) Veröffentlichungstag der Anmeldung: 12.09.2018
(73) Patentinhaber: HTCycle GmbH, 17390 Murchin (DE)
(72) Erfinder: KUSCHE, Stepan Nicolja, 76669 Bad Schönborn (DE)
(74) Vertreter: Geitz Truckenmüller Lucht Christ

(56) Entgegenhaltungen:
- WO-A1-2013/079063
- CN-A- 105 264 048
- DE-A1-102010 044 200
- US-A1- 2006 096 163
- US-A1- 2010 162 619
- US-A1- 2012 042 566
- US-B2- 8 043 505

## Beschreibung

Die vorliegende Erfindung betrifft eine Vorrichtung zur Durchführung einer hydrothermalen Karbonisierungsreaktion, umfassend einen Reaktionstank, welcher zur Aufnahme von Heißdampf mit einem Dampfbereiter und zur Aufnahme von Biomasse über ein Zuführrohr mit einem Mischtank verbunden ist und welcher zum Ablassen eines in dem Reaktionstank aus Heißdampf und Biomasse entstehenden Slurry mit einem Puffertank verbunden ist, wobei der Mischtank einen ersten Wärmeübertrager zur Abgabe von Wärme an die in dem Mischtank vorgehaltene Biomasse aufweist, welcher mit einem dem Puffertank zugeordneten zweiten Wärmeübertrager zur Aufnahme von Wärme von aus dem Reaktionstank in den puffertank abgelassenem Slurry zu einem geschlossenen Wärmekreis verbunden ist, wobei der Mischtank und/oder der Puffertank von wenigstens einer Wärmeübertragerschlange umgeben und/oder durchzogen sind.

Solche Vorrichtungen sind bereits aus der US 8,043,505 B2 vorbekannt. Ähnliche Lösungen sind auch in der DE 10 2010 044 200 A1 und der US 2010/0162619 A1 beschrieben.

Ferner ist eine derartige Vorrichtung bereits aus der DE 10 2011 001 108 A1 vorbekannt. Dort findet eine hydrothermale Karbonisierungsreaktion in einem Reaktionstank statt, der aus einem Mischtank bzw. Vorheiztank beschickt wird. Der Mischtank ist über eine Feststoffpumpe mit dem Reaktionstank verbunden, welche die Biomasse nach einer Vorbehandlung mit einem im Vergleich zu den Reaktionsbedingungen im Reaktor niedrigeren Druck und einer niedrigeren Temperatur in den Reaktor einfördert. Ein solcher Mischtank ist dafür ausgelegt, mehr oder weniger einen Batch vorzubereiten und dann vollständig in den Reaktor entleert zu werden.

Die eigentliche Karbonisierungsreaktion findet dann im Reaktionstank unter einem Druck von etwa 25 bar und bei Temperaturen von 210°C bis 230°C statt. Zunächst werden hierbei die Strukturen der Biomasse aufgespalten, um im Rahmen einer Hydrolyse die Zellulose der Biomasse in Glukose aufzuspalten. Danach erfolgt die eigentliche Karbonisierung. Eine Durchmischung der Biomasse erfolgt hierbei ebenso wie eine Zuführung von Heißdampf, um den Wasseranteil in dem Gemisch zu erhöhen und einen Slurry zu bilden, in dem die Karbonisierungsreaktion möglichst effektiv ablaufen kann. Schließlich kombinieren sich im Rahmen der abschließenden Kondensation die zunächst wasserlöslichen Kohlenstoff-Bestandteile zu größeren Molekülen.

Nach der Reaktion sieht die frühere Ausgestaltung des Verfahrens einen Puffertank vor, in den der durchreagierte Slurry aus dem Reaktionstank verbracht wird. Dort wird der Slurry wiederum auf einem niedrigeren Druckniveau langsam abgekühlt.

Letztlich sieht das Verfahren vor, Biomasse in den Energieträger Biokohle umzuwandeln. Um möglichst effektiv zu arbeiten, soll möglichst viel Energie während des Verfahrens eingespart werden, zudem ist es wichtig, die Auslastung des Systems zu optimieren, um auch in dieser Hinsicht möglichst effektiv zu arbeiten.

Vor diesem Hintergrund liegt der vorliegenden Erfindung die Aufgabe zu Grunde, die Energiebilanz weiter zu verbessern und das Verfahren effektiver zu gestalten.

Dies gelingt durch eine Vorrichtung zur Durchführung einer hydrothermalen Karbonisierungsreaktion gemäß den Merkmalen des Anspruchs 1. Weitere sinnvolle Ausgestaltungen einer solchen Vorrichtung können den sich anschließenden Unteransprüchen entnommen werden.

Die Erfindung sieht als Lösung dieses Problems vor, anstelle eines einfachen Mischtanks einen so genannten Pulper einzusetzen, der mehr oder minder permanent einen vollständigen Tagesvorrat an Biomasse speichern und vorbereiten und damit einen Reaktionstank regelmäßig befüllen kann. Dazu wird die Biomasse bereits im Pulper erwärmt und durchmischt, sowie vorzugsweise auch bereits hier Heißdampf beigemischt, so dass der Slurry schon im Pulper entsteht und damit sehr leicht und schnell in den Reaktionstank gepumpt werden kann. Dies verringert die Standzeiten, die zuvor für den Transport der Biomasse per Feststoffpumpe in den Reaktionstank benötigt wurden.

Besonders vorteilhaft ist aber vor allem die Verwendung eines ersten Wärmeübertragers, welcher in den Pulper integriert ist. Dieser bildet mit einem zweiten Wärmeübertrager, der in den Puffertank integriert ist und dort Wärme von dem aus dem Reaktor abgelassenen, durchreagierten Slurry aufnimmt, einen Wärmekreis. Die im Puffertank aufgenommene Wärme wird über den Wärmekreis zum Pulper transportiert und dort von der Biomasse aufgenommen. Das hierdurch wieder abkühlende Wärmemedium wird zurück zu dem zweiten Wärmeübertrager im Puffertank geleitet und kühlt dort wieder den Slurry, der seine Wärme auf das Wärmeträger überträgt.

Es entsteht dadurch ein Wärmekreislauf, bei dem der abkühlende Slurry seine Wärme auf die aufzuheizende Biomasse überträgt und somit die einmal in das System eingespeiste Energie nachhaltig im System hält. Ferner kann, um zusätzlich von außen eingreifen zu können, wenigstens ein weiterer Wärmeübertrager in dem Wärmekreis vorgesehen sein, über den gezielt Wärme in den Wärmekreis eingespeist oder aus diesem entnommen werden kann.

Solche Wärmeübertrager lassen sich auf unterschiedliche Weise realisieren. Eine Möglichkeit besteht darin, den jeweiligen Tank mit einer doppelwandigen Außenhülle zu umgeben. Die so zwischen den beiden Außenwänden entstehende Hohlkammer kann dann mit dem Wärmeträgermedium durchströmt werden und die Wärme je nach Einsatzort entweder von der Inneren der beiden Wände aufnehmen oder an diese abgeben. Soweit der Pulper zudem ein Rührwerk besitzt, kann es sinnvoll sein, das Wärmeträger im Gegenstrom zu dem sich aufgrund der Durchmischung ergebenden Strömung in der Biomasse zu führen.

Hierbei kann es sinnvoll sein, eine Isolationsschicht außen auf dem Pulper und dem Puffertank aufzubringen, um die Wärmeverluste durch Abstrahlung von dem Wärmeträgermedium zu verringern.

Alternativ oder ergänzend kann der jeweilige Tank von einer oder mehreren Wärmeübertragerschlangen durchzogen sein, welche durch das Innere des jeweiligen Tanks verlaufen oder es umgeben und aufgrund von Windungen und Wicklungen eine möglichst große Oberfläche besitzen. Im Falle des Wärmeübertragers im Puffertank würde es sich um eine Kühlschlange, im Falle des Wärmeübertragers im Pulper um eine Heizschlange handeln. Ein besonders geeignetes Wärmeträger ist Thermoöl, welches in dem Wärmekreis bevorzugt eingesetzt wird.

Der Pulper muss seine Wärme jedoch nicht ausschließlich über den Wärmekreis aus dem Puffertank beziehen. Insbesondere beim Anfahren des Systems, wenn noch kein Slurry zum Abkühlen bereitsteht, werden andere Quellen für die Beheizung des Pulpers benötigt.

Einen Schritt vor dem Puffertank steht überschüssige Wärme aus dem Reaktionstank zur Verfügung, welcher neben dem Zuführrohr zur Zuführung des Slurry auch ein Gasrohr aufweist, über welches er mit dem Pulper verbunden ist. Bei einem zu hohen Druck im Reaktionstank kann hierüber überschüssiges Gas, so genanntes Purgegas, also Reinigungsgas, aus dem Reaktionstank abgelassen werden, das in den Pulper verbracht wird und dort die Temperatur anhebt.

Initial muss eine Erwärmung im Pulper jedoch über einen Anschluss desselben an einen Dampfbereiter erfolgen. Idealerweise kann dies derselbe Dampfbereiter sein, der auch den Reaktionstank speist. Durch die Zuführung von Heißdampf in den Pulper wird der größte Teil der erforderlichen Energie zum Aufheizen der Biomasse im Pulper bereitgestellt.

Die Aufheizung der Biomasse im Pulper auf seine Betriebstemperatur von um die 90°C kann zudem dadurch vergleichmäßigt werden, dass dem Pulper Mittel zum Durchmischen von Biomasse und Heißdampf zugeordnet werden. Solche Mittel können Rühr- und Mischwerke unterschiedlicher Art sein, etwa Anordnungen von Mischdüsen oder auch ein mechanisches Rührwerk mit einem oder mehreren Rührarmen. Besonders bevorzugt kann ein asymmetrisches Rührwerk eingesetzt werden, welches dafür sorgt, dass die Biomasse nicht nur im Kreis bewegt, sondern auch turbulente Strömungen ausbildet. Im Falle der Anordnung von Mischdüsen in dem Pulper kann insbesondere das Purgegas aus dem Reaktionstank in den Pulper eingebracht werden und so die Energie des Reaktionstanks sowohl zum Beheizen als auch zum Durchmischen der Biomasse beitragen.

Die Zuführung von Heißdampf in den Pulper erlaubt zudem eine Verflüssigung der Biomasse, so dass diese nicht mit einer Feststoffpumpe in den Reaktionstank verbracht werden muss, sondern beispielsweise durch eine Zentrifugalpumpe befördert werden kann. Dies erlaubt eine deutlich schnellere Beschickung des Reaktionstanks und reduziert damit die Standzeit der Vorrichtung zwischen zwei Batches. Ferner stellt die Zentrifugalpumpe auch eine kostengünstigere Alternative zur Feststoffpumpe dar.

In konkreter Ausgestaltung des Pulpers kann dieser einen trichterförmigen Boden besitzen, über den schwere Bestandteile aus der Biomasse abgeschieden werden. Am Boden werden sich Sand und Schlick absetzen, die über eine Ablassöffnung an der Trichterspitze in Richtung eines Sandabscheiders aus dem Pulper ausgetragen werden.

Schließlich ist es im Sinne einer idealen Auslastung sinnvoll, mehrere Reaktionstanks mit einem gemeinsamen Pulper zu verbinden. Hierdurch kann während der Reaktionszeit eines ersten Reaktionstanks die Befüllung des nächsten Reaktionstanks beginnen, so lange bis der erste Reaktionstank wieder entleert wird und seine Beschickung mit Biomasse erneut beginnen kann. Vorzugsweise werden von einem Pulper dadurch etwa sechs Reaktionstanks bedient. Auch für die Puffertanks gilt dasselbe, vorzugsweise werden zwei Puffertanks den durchreagierten Slurry der sechs Reaktionstanks alternativ zueinander aufnehmen.

Ferner kann es in der praktischen Umsetzung sinnvoll sein, den Pulper und/oder den Puffertank nicht als eine einzelne Konstruktion herzustellen, sondern vielmehr mehrere miteinander kommunizierende Tanks zu einem Pulper bzw. einem Puffertank zu kombinieren. Insbesondere lassen sich dadurch günstig erwerbliche Tanks zu einer Tankanordnung kombinieren, anstatt einen teueren und besonders großen Spezialtank zu bauen.

Die vorstehend beschriebene Erfindung wird im Folgenden anhand eines Ausführungsbeispiels näher erläutert.

Es zeigen
- Figur 1: eine schematische Darstellung der Funktionsweise einer erfindungsgemäßen Vorrichtung, sowie
- Figur 2: eine schematische Darstellung des Wärmekreises sowie der Slurryzuführung.

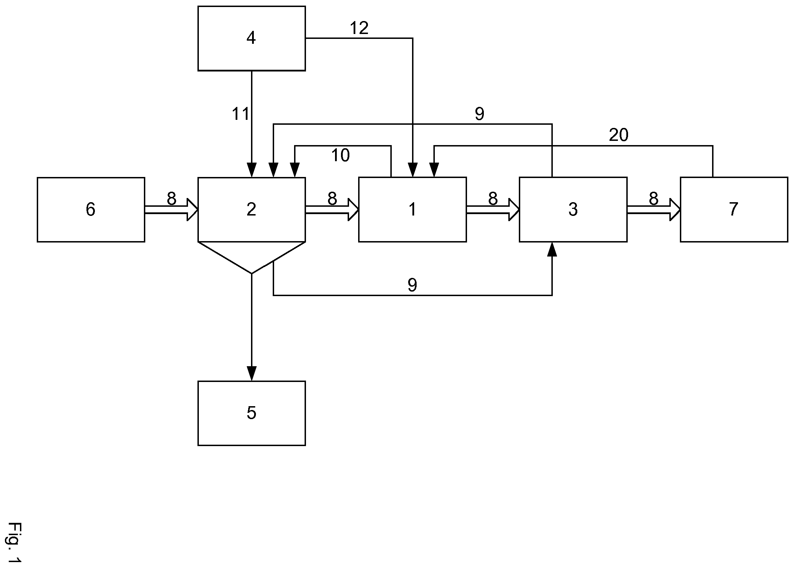

Figur 1 zeigt in einer schematischen Darstellung einen im Schema mittig angeordneten Reaktionstank 1. Dieser ist über ein Zuführrohr 8 mit einem Pulper 2 verbunden, welcher den Reaktionstank 1 mit vorbehandelter, verflüssigter Biomasse beschickt. Die Biomasse im Pulper 2 stammt aus einem Bunker 6, in dem große Mengen an Biomasse vorgehalten werden. Zwischen dem Bunker 6 und dem Pulper 2 befindet sich eine Fördereinheit und eine Störstoffabscheidung, insbesondere ein Metallabscheider, welche die Biomasse für den Pulper 2 aufbereitet. Jeweils der Bedarf für einen Tagesbetrieb sämtlicher mit dem Pulper 2 verbundenen Reaktionstanks 1 wird über ein Zuführrohr 8 in den Pulper 2 verbracht und dort vorgehalten, wobei abgerufene, erwärmte Biomasse sogleich durch neue, kalte Biomasse aus dem Bunker 6 ersetzt wird. Über einen Dampfbereiter 4, der über ein Dampfrohr 11 mit dem Pulper 2 verbunden ist, wird Heißdampf in den Pulper 2 eingeblasen, welcher die im Pulper 2 enthaltene Biomasse zum Einen erwärmt und zum Anderen Wasser hinzufügt, um die Biomasse zu einem Slurry zu verflüssigen. Mithilfe eines hier nicht gezeigten asymmetrischen Rührwerks wird der Slurry in dem Pulper 2 durchmischt, so dass eine gleichmäßige Erwärmung gewährleistet ist und eine möglichst homogene Mischung entsteht. Im Bodenbereich des Pulpers 2 werden sich Sand und Schlick aus der Biomasse absetzen. Diese können in einen Sandabscheider abgelassen werden.

Zur Einsparung von Wärmeenergie wird der Reaktionstank 1 bei einem Überdruck über ein Gasrohr 10 so genanntes Purgegas direkt in den Pulper 2 abgeben, so dass die aus dem Reaktionstank 1 entweichende Energie im System erhalten bleibt. Auch der Reaktionstank wird über ein Dampfrohr 12 von dem Dampfbereiter 4 gespeist, um die im Reaktionstank 1 erforderliche Temperatur, das benötigte Wasser und den erforderlichen Druck zu erzeugen, und so die Reaktionsbedingungen für eine hydrothermale Karbonisierung zu schaffen.

Nach der Reaktion im Reaktionstank 1 wird der Slurry mit der karbonisierten Biomasse über ein weiteres Zuführrohr 8 in den Puffertank 3 abgelassen, wobei dies über einen zumindest teilweisen Druckausgleich zwischen Reaktionstank 1 und Puffertank 3 erfolgen kann. Aufgrund des Druckgefälles zwischen den beiden Tanks 1 und 3 wird der Slurry auf diese Weise sehr schnell in den Puffertank eingesaugt und kann dort anschließend abkühlen. Nach der Abkühlung gelangt der Slurry über ein weiteres Zuführrohr 8 zur Nachbereitung 7. Im Zuge weiterer, hier nicht im Einzelnen betrachteter Verfahren kann aus dem Slurry abgeschiedenes Prozesswasser 20 wieder in den Reaktionstank 1 zurückgeführt werden, wo eine weitere Reaktion mit den noch enthaltenen organischen Frachten des Prozesswassers durchgeführt werden kann. Zudem wird hierdurch das Prozesswasser wieder im Prozess eingesetzt und muss nicht durch Frischwasser ersetzt werden.

Insgesamt ergibt sich, dass der Slurry im Pulper 2 und im Reaktionstank 1 erwärmt und im Puffertank 3 abgekühlt wird. Durch Wärmeübertrager in den beiden Tanks 2 und 3, die einen Wärmekreis 9 zwischen diesen beiden Tanks 2 und 3 ausbilden, kann die Hitze des Slurry im Puffertank 3 auf die Biomasse im Pulper 2 übertragen werden, so dass weniger Energie aus dem System entweichen kann. Diese an den Pulper übertragene Wärmeenergie trägt dazu bei, dass weniger Heißdampf benötigt wird, um den Pulper 2 auf der erforderlichen Temperatur zu halten.

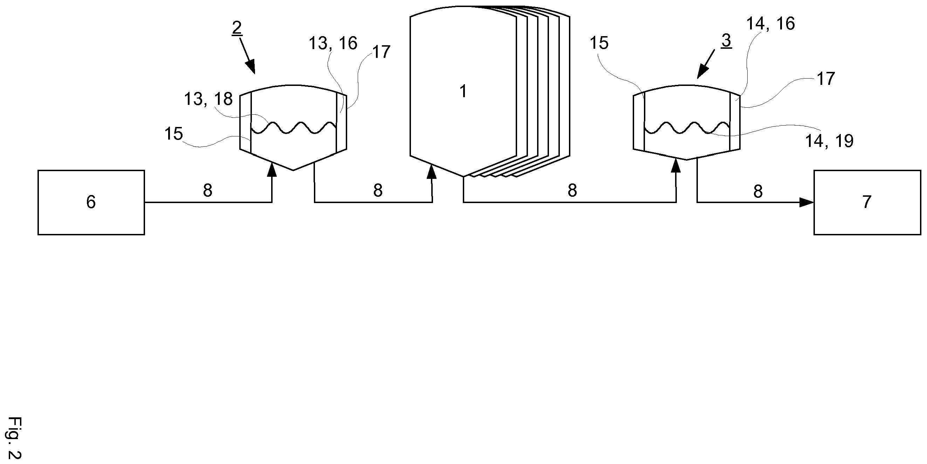

Figur 2 zeigt ein weiteres schematisches Schaubild, in dem mögliche Wärmeübertrager 13 und 14 dargestellt sind. Zum Einen besteht die Möglichkeit, eine Außenhülle 15 der Tanks 2, 3 doppelwandig auszugestalten. So bildet sich zwischen den beiden Wänden eine Hohlkammer 16, die außenseitig mit einer Isolationsschicht 17 bedeckt sein kann um Wärmeverluste zu vermeiden.

Ein erster Wärmetauscher 13 im Pulper 2 gibt die zuvor aufgenommene Wärme über die innere Wand der doppelwandigen Außenhülle 15 ab und erwärmt dadurch den im Pulper 2 aufgenommenen Slurry bei dessen Kontakt mit der fraglichen inneren Wand. Zusätzlich weist der Pulper 2 eine Heizschlange 18 auf, die durch den Pulper 2 hindurchläuft und auch in dessen Innerem Wärme an den Slurry abgibt.

Ein zweiter Wärmetauscher 14 im Puffertank 3 arbeitet bei prinzipiell gleichem Aufbau genau umgekehrt, dort nimmt der in dem Wärmekreis 9 geführte Wärmeträger Wärmeenergie von dem abkühlenden Slurry auf und transportiert diese durch den Wärmekreis 9 hindurch zum Pulper 2. Entsprechend funktioniert die Wärmeübertragerschlange hier auch als Kühlschlange 19.

Vorstehend beschrieben ist somit eine Vorrichtung zur Durchführung einer hydrothermalen Karbonisierungsreaktion, welche durch den Einsatz von Wärmeübertragern und dem Transport von Wärme durch das System die Energiebilanz zu verbessern und durch ein Vorheizen und Verflüssigen der Biomasse bereits im Pulper das Verfahren effektiver zu gestalten.

### BEZUGSZEICHENLISTE

- 1: Reaktionstank
- 2: Pulper
- 3: Puffertank
- 4: Dampfbereiter
- 5: Sandabscheider
- 6: Bunker
- 7: Nachbereitung
- 8: Zuführrohr
- 9: Wärmekreis
- 10: Gasrohr
- 11: Dampfrohr
- 12: Dampfrohr
- 13: erster Wärmeübertrager
- 14: zweiter Wärmeübertrager
- 15: Außenhülle
- 16: Hohlkammer
- 17: Isolationsschicht
- 18: Heizschlange
- 19: Kühlschlange
- 20: Prozesswasserrückführung

## Patentansprüche

1. Vorrichtung zur Durchführung einer hydrothermalen Karbonisierungsreaktion, umfassend einen Reaktionstank (1), welcher zur Aufnahme von Heißdampf mit einem Dampfbereiter (4) und zur Aufnahme von Biomasse über ein Zuführrohr (8) mit einem Mischtank verbunden ist und welcher zum Ablassen eines in dem Reaktionstank (1) aus Heißdampf und Biomasse entstehenden Slurry mit einem Puffertank (3) verbunden ist, wobei der Mischtank einen ersten Wärmeübertrager (13) zur Abgabe von Wärme an die in dem Mischtank vorgehaltene Biomasse aufweist, welcher mit einem dem Puffertank (3) zugeordneten zweiten Wärmeübertrager (14) zur Aufnahme von Wärme von aus dem Reaktionstank (1) in den Puffertank (3) abgelassenem Slurry zu einem geschlossenen Wärmekreis (9) verbunden ist, wobei der Mischtank und/oder der Puffertank (3) von wenigstens einer Wärmeübertragerschlange (18) umgeben und/oder durchzogen sind
**dadurch gekennzeichnet, dass** der Mischtank als Pulper (2) ausgeführt ist, in dem geschlossenen Wärmekreis (9) Thermoöl als Wärmeträger geführt ist und dem Wärmekreis (9) wenigstens ein dritter Wärmeübertrager zugeordnet ist, über welchen gezielt Wärme aus dem Wärmekreis (9) entnehmbar und/oder in den Wärmekreis (9) einspeisbar ist.

2. Vorrichtung gemäß einem der vorhergehenden Ansprüche, **dadurch gekennzeichnet, dass** der Pulper (2) neben dem Zuführrohr (8) auch über ein Gasrohr (10) mit dem Reaktionstank (1) verbunden und mit aus dem Reaktionstank (1) abgelassenem Reinigungsgas beschickbar ist.

3. Vorrichtung gemäß einem der vorhergehenden Ansprüche, **dadurch gekennzeichnet, dass** der Pulper (2) zur Zuführung von Heißdampf über ein Dampfrohr (11) mit dem Dampfbereiter (4) verbunden ist.

4. Vorrichtung gemäß Anspruch 3, **dadurch gekennzeichnet, dass** der Pulper (2) Mittel zum Durchmischen von Biomasse und Heißdampf aufweist.

5. Vorrichtung gemäß Anspruch 4, **dadurch gekennzeichnet, dass** es sich bei den Mitteln zum Durchmischen von Biomasse und Heißdampf um ein asymmetrisches Rührwerk und/oder um eine Mischdüsenanordnung handelt.

6. Vorrichtung gemäß einem der Ansprüche 3 bis 5, **dadurch gekennzeichnet, dass** dem Zuführrohr (8) zwischen Pulper (2) und Reaktionstank (1) eine Zentrifugalpumpe zugeordnet ist.

7. Vorrichtung gemäß einem der vorhergehenden Ansprüche, **dadurch gekennzeichnet**, das der Pulper (2) einen trichterförmigen Boden zum Absetzen von Sand und Schlick aufweist, wobei ein der Trichterspitze zugeordneter Auslass mit einem Sandabscheider (5) verbunden ist.

8. Vorrichtung gemäß einem der vorhergehenden Ansprüche, **dadurch gekennzeichnet, dass** einem Pulper (2) mehrere parallele gleichartige Reaktionstanks (1) zugeordnet sind.

9. Vorrichtung gemäß einem der vorhergehenden Ansprüche, **dadurch gekennzeichnet, dass** der Pulper (2) und/oder der Puffertank (3) jeweils aus mehreren, miteinander kommunizierenden, vorzugsweise gleichartigen, Tankeinheiten hergestellt ist.

## Claims

1. A device for carrying out a hydrothermal carbonization reaction, comprising a reaction tank (1), which for receiving superheated steam is connected to a steam provider (4), and for receiving biomass is connected to a mixing tank via a feed tube (8), and which for discharging slurry formed in the reaction tank (1) from superheated steam and biomass is connected to a buffer tank (3), wherein the mixing tank has a first heat exchanger (13) for delivering heat to the biomass held in the mixing tank, the first heat exchanger being connected to a second heat exchanger (14), associated with the buffer tank (3), for receiving heat from the slurry that is discharged from the reaction tank (1) into the buffer tank (3) to form a closed thermal circuit (9), wherein at least one heat exchanger coil (18) surrounds or passes through the mixing tank and/or the buffer tank (3),
**characterized in that** the mixing tank is designed as a pulper (2) in which thermal oil as heat transfer medium is conducted in the closed thermal circuit (9), and at least a third heat exchanger via which heat is removable from the thermal circuit (9) and/or suppliable into the thermal circuit (9) in a targeted manner is associated with the thermal circuit (9).

2. The device according to one of the preceding claims, **characterized in that** the pulper (2) is connected to the feed tube (8), and also to the reaction tank (1) via a gas tube (10), and is feedable with cleaning gas that is discharged from the reaction tank (1).

3. The device according to one of the preceding claims, **characterized in that** for supplying superheated steam, the pulper (2) is connected to the steam provider (4) via a steam tube (11).

4. The device according to Claim 3, **characterized in that** the pulper (2) has means for mixing biomass and superheated steam.

5. The device according to Claim 4, **characterized in that** the means for mixing biomass and superheated steam is an asymmetrical agitator and/or a mixing nozzle system.

6. The device according to one of Claims 3 to 5, **characterized in that** a centrifugal pump is associated with the feed tube (8) between the pulper (2) and the reaction tank (1).

7. The device according to one of the preceding claims, **characterized in that** the pulper (2) has a funnel-shaped base for depositing sand and sludge, wherein an outlet associated with the funnel tip is connected to a sand separator (5).

8. The device according to one of the preceding claims, **characterized in that** multiple parallel, identical reaction tanks (1) are associated with a pulper (2).

9. The device according to one of the preceding claims, **characterized in that** the pulper (2) and/or the buffer tank (3) are/is produced from multiple, preferably identical, tank units that communicate with one another.

## Revendications

1. Dispositif pour la mise en oeuvre d'une réaction de carbonisation hydrothermale, comprenant une cuve de réaction (1) reliée à un générateur de vapeur (4) pour recevoir de la vapeur chaude, et reliée par un tuyau d'alimentation à une cuve de mélange pour recevoir de la biomasse, et reliée à une cuve tampon (3) pour évacuer une bouillie qui se forme dans la cuve de réaction (1) à partir de vapeur chaude et de biomasse, la cuve de mélange comportant un premier échangeur de chaleur (13) pour dissiper de la chaleur dans la biomasse fournie dans la cuve de mélange, ledit échangeur étant relié à un deuxième échangeur de chaleur (14) attribué à la cuve tampon (3) pour recevoir de la chaleur issue de la bouillie évacuée de la cuve de réaction (1) à la cuve tampon (3) en créant un circuit thermique fermé (9), la cuve de mélange et/ou la cuve tampon (3) étant entourées et/ou traversées par au moins un serpentin caloporteur (18),
**caractérisé en ce que** la cuve de mélange est réalisée sous forme de broyeuse (2), **en ce que** de l'huile thermique comme caloporteur est transportée dans le circuit thermique fermé (9), et **en ce qu'**au moins un troisième échangeur de chaleur est attribué au circuit thermique (9) qui permet de manière ciblée de prélever de la chaleur sur le circuit thermique (9) et/ou d'en introduire dans le circuit thermique (9) .

2. Dispositif selon l'une quelconque des revendications précédentes, **caractérisé en ce que** la broyeuse (2) est reliée à la cuve de réaction (1) en plus du tuyau d'alimentation (8) également par un tuyau de gaz (10) et peut être chargée d'un gaz de nettoyage évacué de la cuve de réaction (1).

3. Dispositif selon l'une quelconque des revendications précédentes, **caractérisé en ce que** la broyeuse (2) est reliée au générateur de vapeur (4) par un tuyau à vapeur (11) pour amener de la vapeur chaude.

4. Dispositif selon la revendication 3, **caractérisé en ce que** la broyeuse (2) présente des moyens pour malaxer la biomasse et la vapeur chaude.

5. Dispositif selon la revendication 4, **caractérisé en ce que** les moyens pour malaxer la biomasse et la vapeur chaude correspondent à un mélangeur asymétrique et/ou à un agencement de buses mélangeuses.

6. Dispositif selon l'une quelconque des revendications 3 à 5, **caractérisé en ce qu'**une pompe centrifuge est attribuée au tuyau d'alimentation (8) entre la broyeuse (2) et la cuve de réaction (1).

7. Dispositif selon l'une quelconque des revendications précédentes, **caractérisé en ce que** la broyeuse (2) présente un fond en forme d'entonnoir pour déposer du sable et de la boue, une sortie attribuée à la pointe d'entonnoir étant reliée à un séparateur de sable.

8. Dispositif selon l'une quelconque des revendications précédentes, **caractérisé en ce que** plusieurs cuves de réaction (1) parallèles de même type sont attribuées à une broyeuse (2).

9. Dispositif selon l'une quelconque des revendications précédentes, **caractérisé en ce que** la broyeuse (2) et/ou la cuve tampon (3) sont réalisées respectivement à partir de plusieurs unités de cuve, de préférence de même type, communiquant entre elles.
